# EUROPEAN PATENT APPLICATION

(11) **EP 4 667 136 A1**
(43) Date of publication of application: **24.12.2025**
(21) Application number: 25176556.6
(22) Date of filing: 15.05.2025
(51) Int. Cl.: B22F 5/00, B22F 10/38, B22F 10/28, B22F 10/50, B22F 10/62, B22F 10/64, B33Y 10/00, F02F 1/22, F02F 1/06, B33Y 80/00, B33Y 40/20

(54) **METHODS FOR MANUFACTURING ADDITIVELY MANUFACTURED STRUCTURES FOR INTERNAL COMBUSTION ENGINES AND SAID ADDITIVELY MANUFACTURED STRUCTURES**

(30) Priority: 20.05.2024 US 202463649538 P; 30.12.2024 US 202419005006
(71) Applicant: The Boeing Company, Arlington, VA 22202 (US)
(72) Inventor: ASTON, Richard W., Arlington, VA 22202 (US); ASTON, Trent M., Arlington, VA 22202 (US); SCHOENBORN, Nicole D., Arlington, VA 22202 (US); ZILZ, Rachel E., Arlington, VA 22202 (US); JAIN, Nicole M., Arlington, VA 22202 (US)
(74) Representative: Plasseraud IP

(57) **Abstract**

A method for manufacturing an additively manufactured structure for an internal combustion engine includes identifying a start point on a build plate for construction of the additively manufactured structure and identifying an orientation of the additively manufactured structure to the build plate such that surface areas of the internal body surface and each internal port surface are at least approximately 20 degrees offset from parallel to the build plate for the additively manufactured structure such that no portion of the surface areas is equivalent to an area of a circle having a radius of 5 mm or larger. The additively manufactured structure includes a body member and at least two gas ports. The body member defines an external body surface and a body bore. The body bore defines an internal body surface. Each gas port defines an external port surface and a port bore. Each port bore defines an internal port surface.

## Description

### FIELD

The present disclosure relates generally to methods for manufacturing additively manufactured structures for internal combustion engines and, particularly, to additively manufactured structures that use certain metal alloys that are higher strength, lighter weight and capable of operating at higher temperatures than current internal combustion engines. Use of additively manufactured structures for various components and combinations of components of internal combustion engines are contemplated. For example, the internal combustion engines fabricated using additively manufactured structures find applications in unmanned air vehicles, drones and missiles. Other applications are also contemplated. The additively manufactured structures also may be used for components of other types of assemblies, other types of vehicles, other types of equipment and as construction materials.

### BACKGROUND

Traditionally, internal combustion engines are made of steel, are heavy, and are usually cast, so they must be made of several parts that are machined and then assembled, leading to tolerance build-up and shimming. Existing cast solutions limit engine operating temperatures and lack geometric consistency and engine timing.

Accordingly, those skilled in the art continue with research and development efforts to improve techniques for manufacturing components of internal combustion engines.

### SUMMARY

Disclosed are examples of methods for manufacturing additively manufactured structures for internal combustion engines and said additively manufactured structures. The following is a non-exhaustive list of examples, which may or may not be claimed, of the subject matter according to the present disclosure.

In an example, the disclosed method for manufacturing an additively manufactured structure for an internal combustion engine includes: (1) identifying a start point on a build plate for construction of the additively manufactured structure, the additively manufactured structure including a body member and at least two gas ports, the body member defining an external body surface and at least one body bore, each body bore defining an internal body surface, each gas port defining an external port surface and a port bore, each port bore defining an internal port surface; and (2) identifying an orientation of the additively manufactured structure to the build plate such that surface areas of the internal body surface and each internal port surface are at least approximately 20 degrees offset from parallel to the build plate for the additively manufactured structure such that no portion of the surface areas is equivalent to an area of a circle having a radius of 5 mm or larger.

In an example, the disclosed additively manufactured structure for an internal combustion engine includes a body member and at least two gas ports. The body member defines an external body surface and a body bore. The body bore defining an internal body surface. Each gas port defines an external port surface and a port bore. Each port bore defining an internal port surface. The surface areas of the internal body surface and each internal port surface are at least approximately 20 degrees offset from parallel to a build plate for the additively manufactured structure such that no portion of the surface areas is equivalent to an area of a circle having a radius of 5 mm or larger.

Other examples of the disclosed methods for manufacturing additively manufactured structures for internal combustion engines and said additively manufactured structures will become apparent from the following detailed description, the accompanying drawings and the appended claims.

### BRIEF DESCRIPTION OF THE DRAWINGS

Fig. 1 is a flow diagram of an example of a method for manufacturing an additively manufactured structure for an internal combustion engine;
Fig. 2A-C are cross sectional side views of examples of an additively manufactured structure for an internal combustion engine, each with varying internal fluid channel configurations;
Fig. 3 is a cross sectional side view of an example of an additively manufactured structure for an internal combustion engine at 25 percent through additive manufacturing;
Fig. 4 is a cross sectional side view of an example of an additively manufactured structure for an internal combustion engine at 50 percent through additive manufacturing;
Fig. 5 is a cross sectional side view of an example of an additively manufactured structure for an internal combustion engine at 75 percent through additive manufacturing;
Fig. 6 is a cross sectional side view of an example of an additively manufactured structure for an internal combustion engine at 100 percent through additive manufacturing;
Fig. 7, in combination with Fig. 1, is a flow diagram of another example of a method for manufacturing an additively manufactured structure for an internal combustion engine;
Fig. 8, in combination with Fig. 1, is a flow diagram of yet another example of a method for manufacturing an additively manufactured structure for an internal combustion engine;
Fig. 9, in combination with Fig. 1, is a flow diagram of still another example of a method for manufacturing an additively manufactured structure for an internal combustion engine;
Fig. 10, in combination with Fig. 1, is a flow diagram of still yet another example of a method for manufacturing an additively manufactured structure for an internal combustion engine;
Fig. 11 is a cross sectional side view of an example of an additively manufactured structure for an internal combustion engine after additive manufacturing and prior to completion of post-processing;
Figs. 12A-B provide a flow diagram of another example of a method for manufacturing an additively manufactured structure for an internal combustion engine;
Fig. 13, in combination with Figs. 12A-B, is a flow diagram of yet another example of a method for manufacturing an additively manufactured structure for an internal combustion engine;
Fig. 14 is a flow diagram of an example of the preparing of the build plate in the method of Figs. 12A-B;
Fig. 15 is a block diagram of unmanned air vehicle production and service methodology that implements one or more of the examples of methods for manufacturing additively manufactured structures for internal combustion engines disclosed herein; and
Fig. 16 is a schematic illustration of an unmanned air vehicle that incorporates one or more examples of additively manufactured structures for internal combustion engines produced using one or more of the examples of methods for manufacturing additively manufactured structures for internal combustion engines disclosed herein.

### DETAILED DESCRIPTION

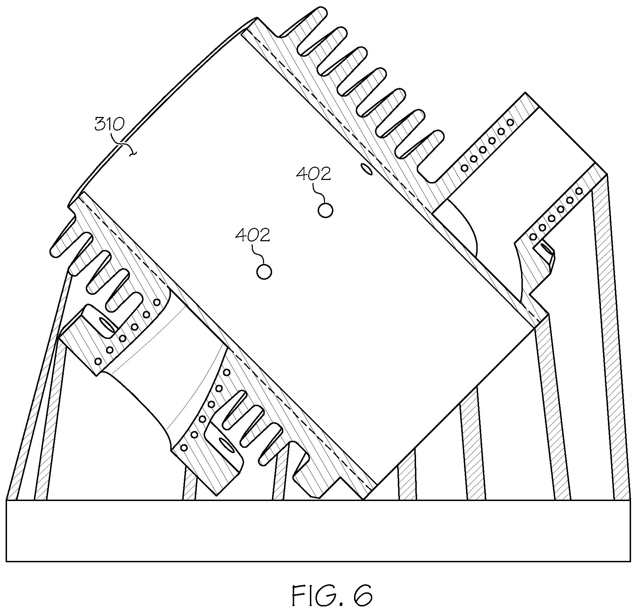

The various examples of methods 100, 700, 800, 900, 1000, 1200, 1300, 1400 and additively manufactured structures 200 disclosed herein identify various techniques for manufacturing the additively manufactured structures 200 and identify various features and characteristics of the additively manufactured structures 200. For example, the techniques establish a method of additive manufacturing an internal combustion engine that includes printing an internal combustion engine on a build plate. The printed engine may be oriented on the build plate (see, e.g., Fig. 6) such that one or more gas ports define internal surfaces within the gas port oriented such that no planar portion of the surface with an equivalent area of a circle of five-millimeter equivalent radius or larger has an orientation shallower than 20 degrees from the build plate horizontal. In another example, the orientation may be no shallower than 25 degrees. In yet another example, the orientation may be no shallower than 30 degrees. The gas ports may include intake and exhaust gas ports. In another example, the gas ports may include internal fluid channels (e.g., coolant channels).

For example, the additively manufactured structures 200 may include a printed engine designed to be additively manufactured, where, before machining, the printed engine is oriented on the build plate (see, e.g., Fig. 6) such that one or more gas ports define internal surfaces within the gas port oriented such that no planar portion of the surface with an equivalent area of a circle of five-millimeter equivalent radius or larger has an orientation shallower than 20 degrees from the build plate horizontal. In another example, the orientation may be no shallower than 25 degrees. In yet another example, the orientation may be no shallower than 30 degrees. The gas ports may include intake and exhaust gas ports. In another example, the gas ports may include internal fluid channels (e.g., coolant channels).

In 3-D printing, horizontally suspended features of an additively manufactured structure are printed along with support structure. For internal engine fluid passageways, it may be difficult or even impossible to machine such passages. Conversely, considerable time can be saved by not machining such passages to remove support structures. However, such passages need to be smooth for proper performance. The requirement for support structures can be avoided if the additively manufactured structure is angled and/or designed such that, when built, internal planar surfaces are offset from the horizontal by a set value, such as 20 to 30 degrees (see, e.g., Fig. 6).

In various examples, the additively manufactured structure does not include or require support structures for internal passageways. For example, an additively manufactured internal combustion engine does not have or require any removable support structure touching internal surfaces (e.g., functional pathways) of its gas ports internal surfaces. In contrast, support structures touching external thermal fins can be used, especially for the thinner fins to prevent bending during building. However, support structures are not used or at least avoided on ports due to the strong effect on performance and variability. For some engines, permanent load bearing support structures that are inherently part of the engine are used. Unlike temporary support structures, the permanent support structures do not have to be machined away.

Where any two spanning surfaces converge at an edge that has a region where orientation is less than 20 degrees from the build plate horizontal, the edge includes a filleted transition, and the region has less than three-millimeter equivalent surface area radius. In other example, the region has less than five-millimeter radius equivalent surface area. For some edges, being "horizontal" cannot be avoided but such area can exist with a limited area of unsupported surface defined by a corresponding surface area.

Where the engine defines an engine cylinder bore, the cylinder bore further defines a material sleeve manufactured along with the engine material defining a continuous bore that extends across intersecting ports. The intersecting parts further define powder removal holes. When the bore is machined there is no residual material in the ports and the bore is a precise geometry. The sleeve material provides extra material in the cylinder bore that gets machined out to exact specifications. Extending the material sleeve across ports provides extra structure during the build that can be removed by machining already required for tolerances. There are holes put into the sleeve where there are ports present so that powder can be easily removed.

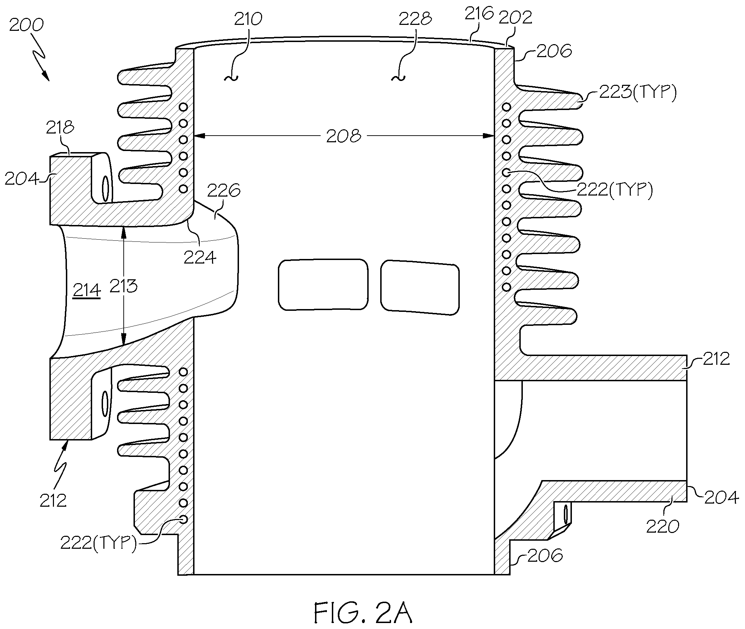

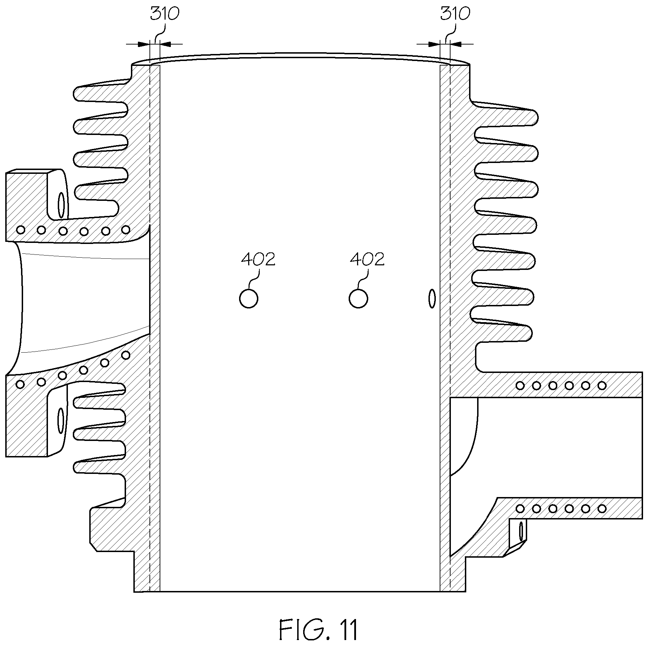

For example, Fig. 11 shows a completed printed part that includes a continuous sleeve, clean out holes and no internal port supports. The small powder removal holes 402 are to remove powder from exhaust ports and follow the rules of internal surface orientation and filleted transitions. Figs. 2A-C show examples of the final machined part in which the sleeve is machined out to reveal smooth interfaces with the gas ports.

In various examples, the additively manufactured internal combustion engine includes a metal alloy material that is not susceptible to hot cracking and retains strength greater than 206.8 MPa (30 kilo pounds per square inch) at operating temperatures of 246.1 °C (475 °F) for 1,000 hours. In another example, the metal alloy material includes aluminum and/or magnesium. In yet another example, the alloy can be strength hardened using direct age hardening.

In various examples, for laser powder bed fusion, a laser is configured to pre-heat, post-heat, or a combination of both, the additive material to prevent cracking. For example, on magnesium alloy builds, cracking of the built material was alleviated with pre-heating and/or post-heating.

In various examples, the internal combustion engine also includes a wear-resistant coating applied to the engine cylinder bore. The coating may range between 400 and 2800 on the Vickers scale. In another example, the coating includes nickel-silicon-carbide. In yet another example, the coating includes tungsten carbide. For example, nickel-silicon-carbide has been applied to AlSi10Mg and Scalmalloy after specialization of chemistries.

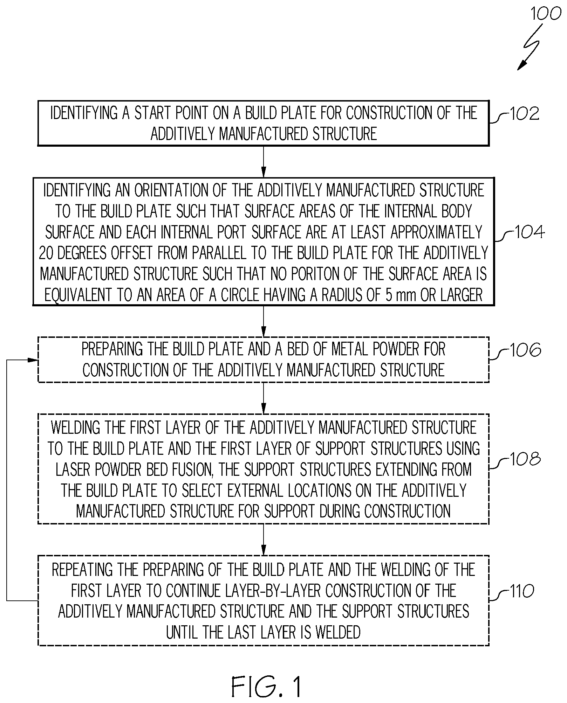

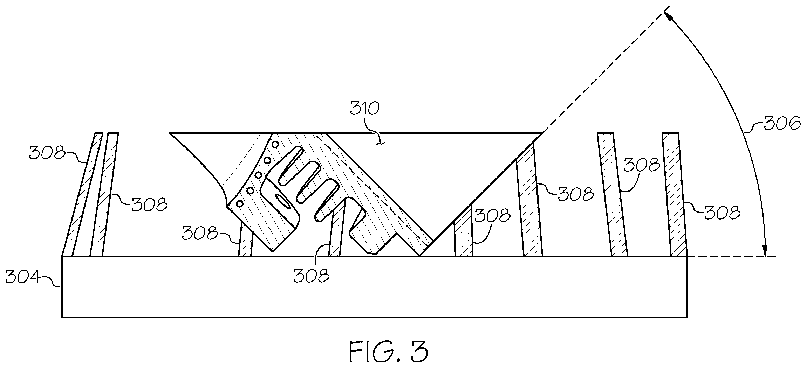

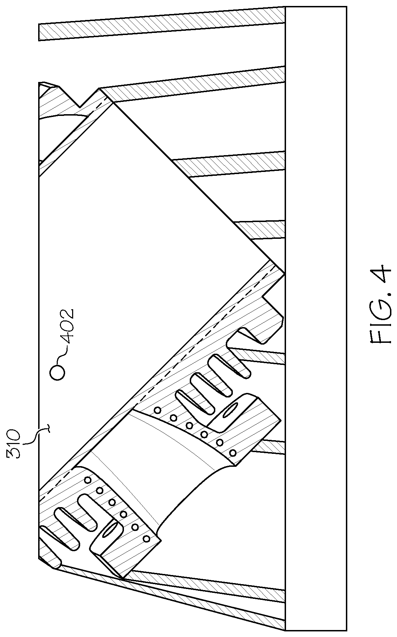

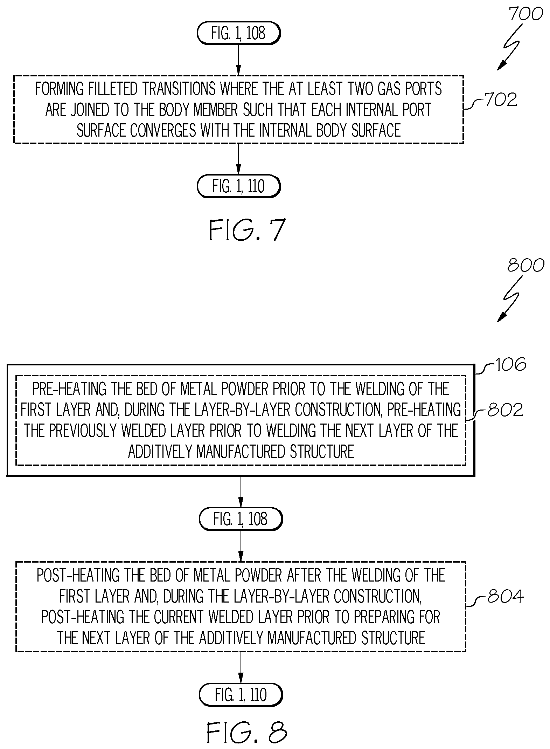

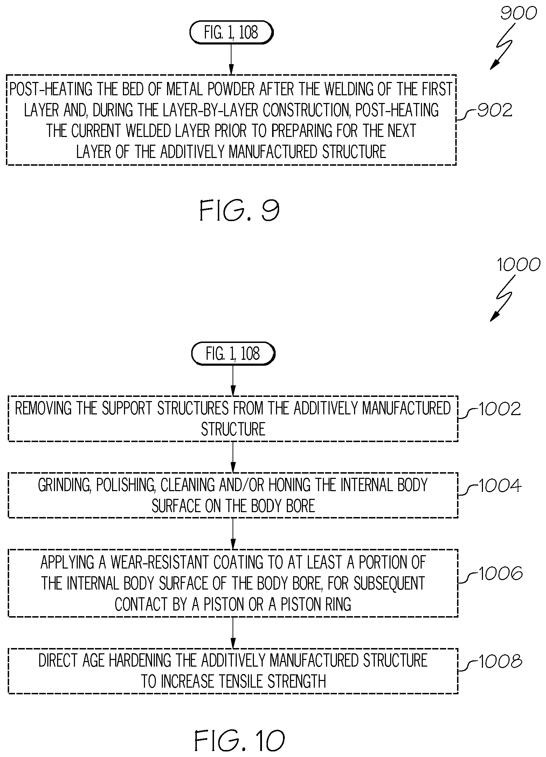

Referring generally to Figs. 1, 2A-C, 3, 4 and 7-10, by way of examples, the present disclosure is directed to methods 100, 700, 800, 900, 1000 for manufacturing an additively manufactured structure 200 for an internal combustion engine. Fig. 1 provides an example of the method 100 for manufacturing an additively manufactured structure 200 for an internal combustion engine. Figs. 2A-C each show a cross sectional side view of an example of an additively manufactured structure 200 for an internal combustion engine. Fig. 3 shows a cross sectional side view of an example of an additively manufactured structure 200 for an internal combustion engine at 25 percent through additive manufacturing. Fig. 4 shows a cross sectional side view of an example of an additively manufactured structure 200 for an internal combustion engine at 50 percent through additive manufacturing. Fig. 7, in combination with Fig. 1, provides an example of the method 700 for manufacturing an additively manufactured structure 200 for an internal combustion engine. Fig. 8, in combination with Fig. 1, provides an example of the method 800 for manufacturing an additively manufactured structure 200 for an internal combustion engine. Fig. 9, in combination with Fig. 1, provides an example of the method 900 for manufacturing an additively manufactured structure 200 for an internal combustion engine. Fig. 10, in combination with Fig. 1, provides an example of the method 1000 for manufacturing an additively manufactured structure 200 for an internal combustion engine. In addition to the specific combinations of the methods described above, it should be understood that other combinations of the described methods between each other are also possible.

With reference again to Figs. 1, 2A-C and 3, in one or more examples, a method 100 (see Fig. 1) for manufacturing an additively manufactured structure 200 for an internal combustion engine includes identifying 102 a start point 302 on a build plate 304 for construction of the additively manufactured structure 200. The additively manufactured structure 200 includes a body member 202 and at least two gas ports 204. The body member 202 defines an external body surface 206 and at least one body bore 208. Each body bore 208 defining an internal body surface 210. Each gas port 204 defines an external port surface 212 and a port bore 213. Each port bore 213 defining an internal port surface 214. At 104, an orientation 306 of the additively manufactured structure 200 to the build plate 304 is identified such that surface areas of the internal body surface 210 and each internal port surface 214 are at least approximately 20 degrees offset from parallel to the build plate 304 for the additively manufactured structure 200 such that no portion of the surface areas is equivalent to an area of a circle having a radius of 5 mm or larger. That is, in some examples, surface areas that are as large as or larger than a circle with a radius of 5 mm are oriented at an angle (e.g., at least approximately 20 degrees) from parallel to the build plate 304.

In another example of the method 100, the orientation 306 of the additively manufactured structure 200 to the build plate 304 is such that surface areas of the internal body surface 210 and each internal port surface 214 are at least approximately 25 degrees offset from parallel to the build plate 304 for the additively manufactured structure 200 such that no portion of the surface areas is equivalent to an area of a circle having a radius of 5 mm or larger. That is, in some examples, surface areas that are as large as or larger than a circle with a radius of 5 mm are oriented at an angle (e.g., at least approximately 25 degrees) from parallel to the build plate 304. In a further example, the orientation 306 of the additively manufactured structure 200 to the build plate 304 is such that surface areas of the internal body surface 210 and each internal port surface 214 are at least approximately 30 degrees offset from parallel to the build plate 304 for the additively manufactured structure 200 such that no portion of the surface areas is equivalent to an area of a circle having a radius of 5 mm or larger. That is, in some examples, surface areas that are as large as or larger than a circle with a radius of 5 mm are oriented at an angle (e.g., at least approximately 30 degrees) from parallel to the build plate 304.

In still another example of the method 100, the body member 202 includes an engine cylinder 216 and the at least two gas ports 204 includes an intake gas port 218 and an exhaust gas port 220.

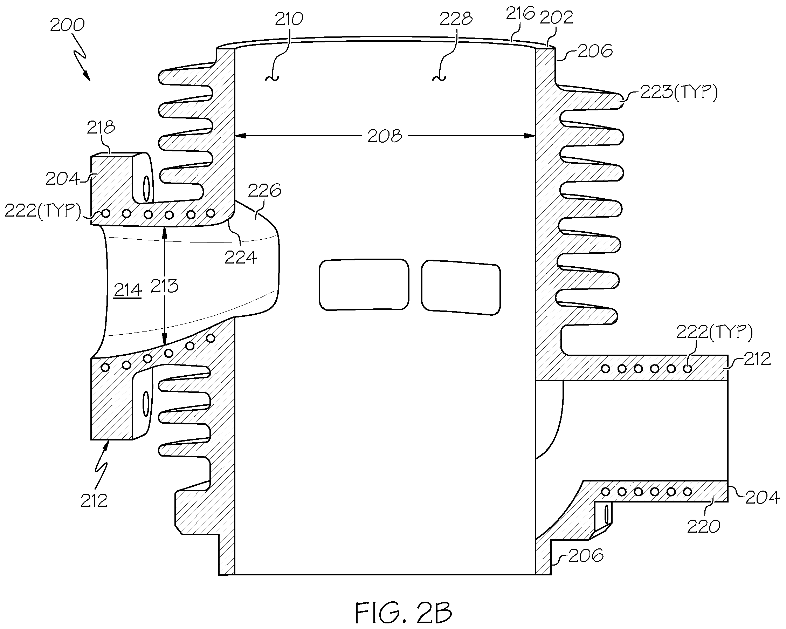

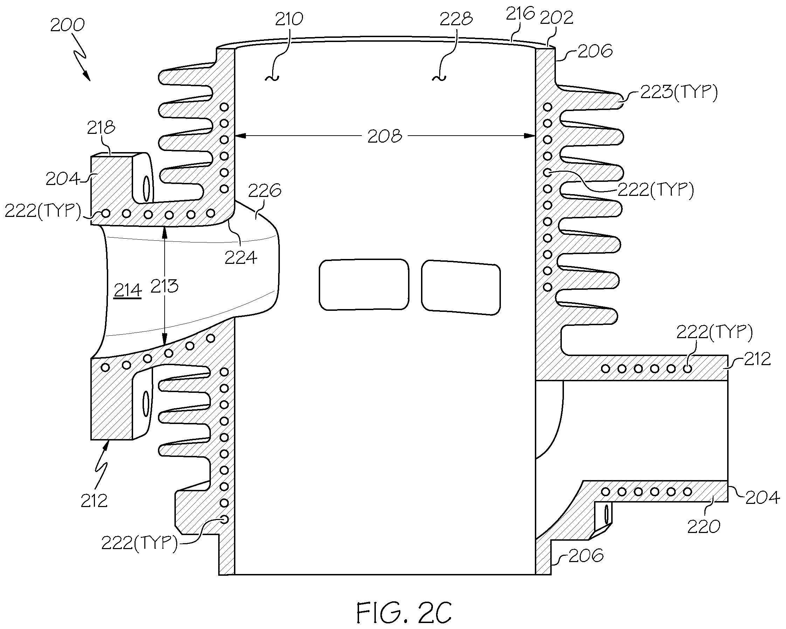

In still yet another example, the method 100 also includes preparing 106 the build plate 304 and a bed of metal powder for construction of the additively manufactured structure 200. At 108, a first layer of the additively manufactured structure 200 and the first layer of support structures 308) is welded to the build plate 304 using laser powder bed fusion. The support structures 308 extending from the build plate 304 to select external locations on the additively manufactured structure 200 for support during construction. At 110, the preparing 106 of the build plate 304 and the welding 108 of the first layer are repeated to continue layer-by-layer construction of the additively manufactured structure 200 and the support structures 308 until a last layer is welded. In a further example, the layer-by-layer construction builds internal fluid channels 222 into the additively manufactured structure 200 to provide cooling. With reference to Fig. 2A, in some examples, the internal fluid channels 222 can be proximate the body bore 208 to facilitate cooling. With reference to Fig. 2B, in other examples, the internal fluid channels 222 can be proximate one or more of the at least two gas ports 204 to facilitate cooling. With reference to Fig. 2C, in still other examples, the internal fluid channels 222 can be proximate the body bore 208 and one or more of the at least two gas ports 204 to facilitate cooling. In another further example, during the layer-by-layer construction, the internal body surface 210 and each internal port surface 214 are constructed free of support structures 308 to the build plate 304. In yet another further example, the layer-by-layer construction builds external cooling fins 223 extending from the external body surface 206 of the body member 202. In still yet another further example, during the layer-by-layer construction, internal surface areas of the additively manufactured structure 200 that cannot be accessed for machining are constructed free of support structures 308 to the build plate 304. In a further example, the welding 108 is performed by a melt laser.

With reference again to Figs. 1-4 and 7, in one or more examples, a method 700 (see Fig. 7) for manufacturing an additively manufactured structure 200 for an internal combustion engine includes the method 100 of Fig. 1. The method 700 continues from 108 of Fig. 1 to 702 where filleted transitions 224 are formed where the at least two gas ports 204 are joined to the body member 202 such that each internal port surface 214 of the at least two gas ports 204 converges with the internal body surface 210. The radius of the filleted transition 224 is less than approximately three millimeters where transition surfaces 226 of the filleted transitions 224 are less than approximately 20 degrees offset from parallel to the build plate 304.

In another example of the method 700, radii of the filleted transition 224 are less than approximately five millimeters where the transition surfaces 226 of the filleted transitions 224 are less than approximately 20 degrees offset from parallel to the build plate 304.

In yet another example of the method 700, the layer-by-layer construction builds a metal sleeve 310 on the internal body surface 210 of the body bore 208 with powder removal holes 402 to facilitate subsequent post-processing of the internal body surface 210. In still another example of the method 700, the layer-by-layer construction builds continuous cylindrical walls that allow unsupported edges of the at least two gas ports 204 that intersect the body bore 208 to be built during the layer-by-layer construction. In this example, the continuous cylindrical walls machined away during subsequent post-processing to expose the at least two gas ports 204 to the body bore 208.

In still yet another example of the method 700, the metal powder includes a metal alloy material that retains tensile strength greater than 206.8 MPa (30 kilo pounds per square inch) at operating temperatures of 246.1 °C (475 °F) for 1,000 hours.

In another example of the method 700, the metal alloy material includes an aluminum alloy material, a magnesium alloy material or any other suitable metal alloy material in any suitable combination.

With reference again to Figs. 1, 2A-C, 3 and 8, in one or more examples, a method 800 (see Fig. 8) for manufacturing an additively manufactured structure 200 for an internal combustion engine includes the method 100 of Fig. 1. In the method 800, the preparing 106 of the build plate 304 includes pre-heating 802 the bed of metal powder prior to the welding 108 of the first layer. In 802, during the layer-by-layer construction, a previously welded layer is pre-heated prior to welding a next layer of the additively manufactured structure 200. The pre-heating reduces a thermal gradient in the additively manufactured structure 200. At 804, the bed of metal powder is post-heated after the welding 108 of the first layer. In 804, during the layer-by-layer construction, a current welded layer is post heated prior to preparing for the next layer of the additively manufactured structure 200. The post-heating reduces the thermal gradient in the additively manufactured structure 200. After 804, the method 800 continues to 110 of Fig. 1. In a further example, the pre-heating 802 is performed by a pre-heat laser.

With reference again to Figs. 1, 2A-C, 3 and 9, in one or more examples, a method 900 (see Fig. 9) for manufacturing an additively manufactured structure 200 for an internal combustion engine includes the method 100 of Fig. 1. The method 900 continues from 108 of Fig. 1 to 902 where the bed of metal powder is post-heated after the welding 108 of the first layer. At 902, during the layer-by-layer construction, a current welded layer is post-heated prior to preparing for a next layer of the additively manufactured structure 200. The post-heating reduces a thermal gradient in the additively manufactured structure 200. In a further example, the post-heating 902 is performed by a post-heat laser.

With reference again to Figs. 1, 2A-C, 3 and 10, in one or more examples, a method 1000 (see Fig. 10) for manufacturing an additively manufactured structure 200 for an internal combustion engine includes the method 100 of Fig. 1. The method 1000 continues from 110 of Fig. 1 to 1002 where the support structures 308 are removed from the additively manufactured structure 200. At 1004, the internal body surface 210 on the body bore 208 is ground, polished, cleaned and/or honed. At 1006, a wear-resistant coating 228 is applied on the internal body surface 210 of the body bore 208 for subsequent contact by a piston or a piston ring.

In another example of the method 1000, the wear-resistant coating 228 includes a nickel-silicon-carbide coating, a tungsten carbide coating or any other suitable wear-resistant coating in any suitable combination. In still another example, the method 1000 also includes applying a strike electroplating to at least a portion of the additively manufactured structure 200 prior to the applying 1006 of the wear-resistant coating 228. For example, the strike electroplating may be applied to the additively manufactured structure 200 after preparing the surface, which can include the grinding, polishing, cleaning and/or honing 1004 and the wear-resistant coating 228 may be applied over the strike electroplating. In still yet another example, the method 1000 also includes applying an electroless nickel plating to at least a portion of the additively manufactured structure 200 prior to the applying 1006 of the wear-resistant coating 228. For example, the electroless nickel plating may be applied to the additively manufactured structure 200 after the preparing of the surface, which can include grinding, polishing, cleaning and/or honing 1004 and the wear-resistant coating 228 may be applied over the strike electroplating. In other examples, the electroless nickel plating may also be applied over the strike electroplating.

In another example, the method 1000 also includes direct age hardening 1008 the additively manufactured structure 200 to increase tensile strength. In a further example, the wear-resistant coating 228 has a hardness between 400 and 2800 on a Vickers scale.

Referring generally to Figs. 2A-C and 3, by way of examples, the present disclosure is directed to an additively manufactured structure 200 for an internal combustion engine. Figs. 2A-C each show a cross sectional side view of an example of the additively manufactured structure 200 for an internal combustion engine. Fig. 3 shows a cross sectional side view of an example of the additively manufactured structure 200 for an internal combustion engine at 25 percent through additive manufacturing.

With reference again to Figs. 2 and 3, in one or more examples, an additively manufactured structure 200 for an internal combustion engine includes a body member 202 and at least two gas ports 204. The body member 202 defines an external body surface 206 and a body bore 208. The body bore 208 defining an internal body surface 210. Each gas port 204 defines an external port surface 212 and a port bore 213. Each port bore 213 defining an internal port surface 214. Surface areas of the internal body surface 210 and each internal port surface 214 are at least approximately 20 degrees offset from parallel to a build plate 304 for the additively manufactured structure 200 such that no portion of the surface areas is equivalent to an area of a circle having a radius of 5 mm or larger. That is, in some examples, surface areas that are as large as or larger than a circle with a radius of 5 mm are oriented at an angle (e.g., at least approximately 20 degrees) from parallel to the build plate 304.

In another example of the additively manufactured structure 200, surface areas of the internal body surface 210 and each internal port surface 214 are at least approximately 25 degrees offset from parallel to the build plate 304 for the additively manufactured structure 200 such that no portion of the surface areas is equivalent to an area of a circle having a radius of 5 mm or larger. That is, is some examples, surface areas that are as large as or larger than a circle with a radius of 5 mm are oriented at an angle (e.g., at least approximately 25 degrees) from parallel to the build plate 304. In a further example, surface areas of the internal body surface 210 and each internal port surface 214 are at least approximately 30 degrees offset from parallel to the build plate 304 for the additively manufactured structure 200 such that no portion of the surface areas is equivalent to an area of a circle having a radius of 5 mm or larger. That is, in some examples, surface areas that are as large as or larger than a circle with a radius of 5 mm are oriented at an angle (e.g., at least approximately 30 degrees) from parallel to the build plate 304.

In still another example of the additively manufactured structure 200, the body member 202 includes an engine cylinder 216 and the at least two gas ports 204 includes an intake gas port 218 and an exhaust gas port 220.

With reference to Fig. 2A, in still yet another example, the additively manufactured structure 200 can also include internal fluid channels 222 proximate the body bore 208 to facilitate cooling. With reference to Fig. 2B, in still other examples, the internal fluid channels 222 can be proximate one or more of the at least two gas ports 204 to facilitate cooling. With reference to Fig. 2C, in still yet other examples, the internal fluid channels 222 can be proximate the body bore 208 and proximate one or more of the at least two gas ports 204 to facilitate cooling. In another example, the additively manufactured structure 200 also include external cooling fins 223 extending from the external body surface 206 of the body member 202.

In another example of the additively manufactured structure 200, the at least two gas ports 204 are joined to the body member 202 such that each internal port surface 214 of the at least two gas ports 204 converges with the internal body surface 210 to form a filleted transition 224 between the body member 202 and each of the at least two gas ports 204. Where the transition surface 226 of the filleted transition 224 is less than approximately 20 degrees offset from parallel to the build plate 304, a radius of the filleted transition 224 is less than approximately three millimeters. In a further example, where the transition surface 226 of the filleted transition 224 is less than approximately 20 degrees offset from parallel to the build plate 304, the radius of the filleted transition 224 is less than approximately five millimeters.

In yet another example of the additively manufactured structure 200, the additively manufactured structure 200 includes a metal alloy material that retains tensile strength greater than 206.8 MPa (30 kilo pounds per square inch) at operating temperatures of 246.1 °C (475 °F) for 1,000 hours. In a further example, the metal alloy material includes an aluminum alloy material, a magnesium alloy material or any other suitable metal alloy material in any suitable combination. In another further example, the additively manufactured structure 200 is direct age hardened to achieve the tensile strength.

In still another example of the additively manufactured structure 200, the body member 202 includes a wear-resistant coating 228 on the internal body surface 210 of the body bore 208 for subsequent contact by a piston or a piston ring. In a further example, the wear-resistant coating 228 has a hardness between 400 and 2800 on a Vickers scale. In another further example, the wear-resistant coating 228 includes a nickel-silicon-carbide coating, a tungsten carbide coating or any other suitable wear-resistant coating in any suitable combination.

In still yet another example, the additively manufactured structure 200 also includes a strike electroplating on at least a portion of the additively manufactured structure 200. For example, the wear-resistant coating 228 may be applied over the strike electroplating. In another example, the additively manufactured structure 200 also includes an electroless nickel plating on at least a portion of the additively manufactured structure 200. For example, the electroless nickel plating may be applied over the strike electro plating. In other examples, the wear-resistant coating 228 may be application over the electroless nickel plating.

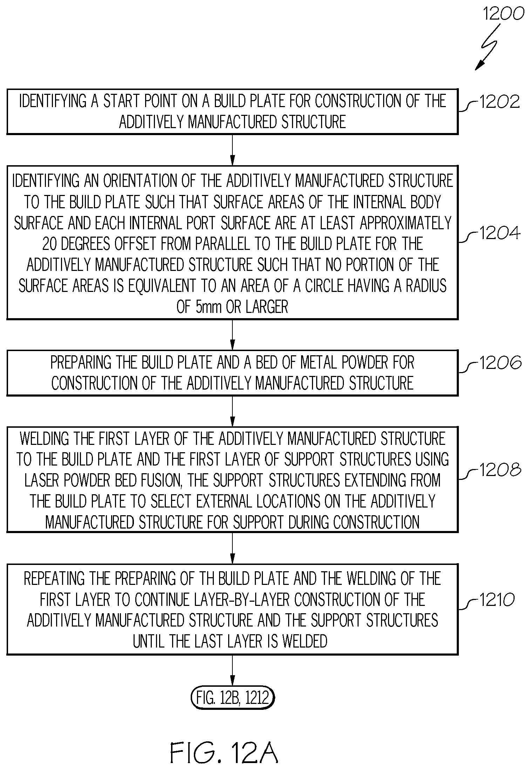

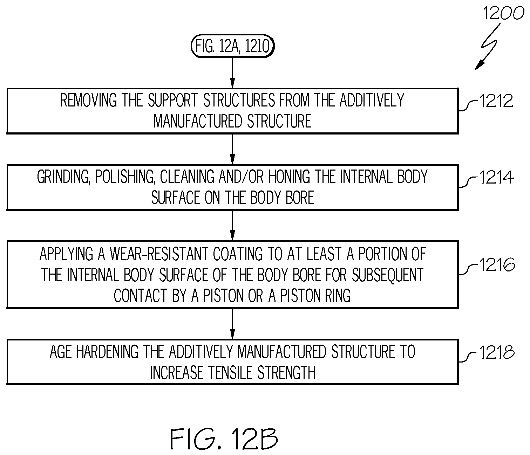

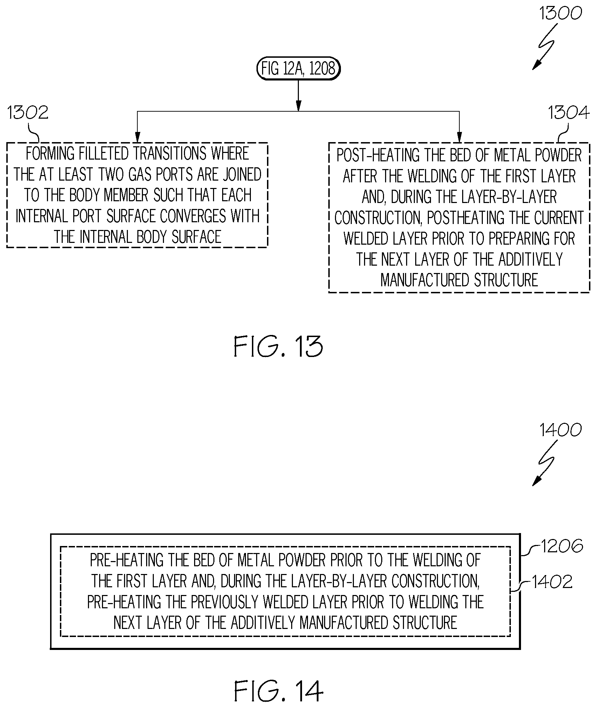

Referring generally to Figs. 2A-C, 3, 12A-B, 13 and 14, by way of examples, the present disclosure is directed to methods 1200, 1300, 1400 for manufacturing an additively manufactured structure 200 for an internal combustion engine. Figs. 2A-C show cross sectional side views of an example of an additively manufactured structure 200 for an internal combustion engine. Fig. 3 shows a cross sectional side view of an example of an additively manufactured structure 200 for an internal combustion engine at 25 percent through additive manufacturing. Figs. 12A-B provide an example of the method 1200 for manufacturing an additively manufactured structure 200 for an internal combustion engine. Fig. 13, in combination with Figs. 12A-B, provides an example of the method 1300 for manufacturing an additively manufactured structure 200 for an internal combustion engine. Fig. 14, in combination with Figs. 12A-B, provides an example of the method 1400 for manufacturing an additively manufactured structure 200 for an internal combustion engine. In addition to the specific combinations of methods described above, it should be understood that other combinations of the described methods between each other are also possible.

With reference again to Figs. 2A-C, 3 and 12A-B, in one or more examples, a method 1200 (see Figs. 12A-B) for manufacturing an additively manufactured structure 200 for an internal combustion engine includes identifying 1202 a start point 302 on a build plate 304 for construction of the additively manufactured structure 200. The additively manufactured structure 200 includes a body member 202 and at least two gas ports 204. The body member 202 defines an external body surface 206 and a body bore 208. The body bore 208 defining an internal body surface 210. Each gas port 204 defines an external port surface 212 and a port bore 213. Each port bore 213 defining an internal port surface 214. At 1204, an orientation 306 of the additively manufactured structure 200 to the build plate 304 is identified such that surface areas of the internal body surface 210 and each internal port surface 214 are at least approximately 20 degrees offset from parallel to the build plate 304 for the additively manufactured structure 200 such that no portion of the surface areas is equivalent to an area of a circle having a radius of 5 mm or larger. That is, in some examples, surface areas that are as large as or larger than a circle with a radius of 5 mm are oriented at an angle (e.g., at least approximately 20 degrees) from parallel to the build plate 304.

At 1206, the build plate 304 and a bed of metal powder are prepared for construction of the additively manufactured structure 200. At 1208, the first layer of the additively manufactured structure 200 and the first layer of support structures 308 are welded to the build plate 304 using laser powder bed fusion. The support structures 308 extending from the build plate 304 to select external locations on the additively manufactured structure 200 for support during construction. At 1210, the preparing 1206 of the build plate 304 and the welding 1208 of the first layer are repeated to continue layer-by-layer construction of the additively manufactured structure 200 and the support structures 308 until a last layer is welded. At 1212, the support structures 308 are removed from the additively manufactured structure 200. At 1214, the internal body surface 210 on the body bore 208 is ground, polished, cleaned and/or honed. At 1216, a wear-resistant coating 228 is applied on the internal body surface 210 of the body bore 208 for subsequent contact by a piston or a piston ring. At 1218, the additively manufactured structure 200 is direct age hardened to increase tensile strength.

With reference again to Figs. 2A-C, 3 , 12A-B and 13, in one or more examples, a method 1300 (see Fig. 13) for manufacturing an additively manufactured structure 200 for an internal combustion engine includes the method 1200 of Figs. 12A-B. The method 1300 continues from 1208 of Fig. 12A to 1302 where filleted transitions 224 are formed where the at least two gas ports 204 are joined to the body member 202 such that each internal port surface 214 of the at least two gas ports 204 converges with the internal body surface 210. Where transition surfaces 226 of the filleted transitions 224 are less than approximately 20 degrees offset from parallel to the build plate 304, a radius of the filleted transition 224 is less than approximately three millimeters.

In another example, the method 1300 also includes post-heating 1304 the bed of metal powder after the welding 1208 of the first layer. At 1304, during the layer-by-layer construction, a current welded layer is post-heated prior to preparing 1206 for the next layer of the additively manufactured structure 200. The post-heating reduces a thermal gradient in the additively manufactured structure 200.

With reference again to Figs. 2A-C, 3, 12A-B and 14, in one or more examples, a method 1400 (see Fig. 14) for manufacturing an additively manufactured structure 200 for an internal combustion engine includes the method 1200 of Figs. 12A-B. In this example, the preparing 1206 of the build plate 304 in Fig. 12A includes pre-heating 1402 the bed of metal powder prior to the welding 1208 of the first layer. At 1402, during the layer-by-layer construction, a previously welded layer is pre-heated prior to welding 1208 a next layer of the additively manufactured structure 200. The pre-heating reduces a thermal gradient in the additively manufactured structure 200.

With reference again to Figs. 2A-C, 3 , 12A-B and 13, the method 1200 also includes applying a strike electroplating to at least a portion of the additively manufactured structure 200 prior to the applying 1216 of the wear-resistant coating 228. For example, the strike electroplating may be applied to the additively manufactured structure 200 after the preparing of the surface, which can include grinding, polishing, cleaning and/or honing 1214 and the wear-resistant coating 228 may be applied over the strike electroplating. In another example, the method 1200 also includes applying an electroless nickel plating to at least a portion of the additively manufactured structure 200 prior to the applying 1216 of the wear-resistant coating 228. For example, the electroless nickel plating may be applied to the additively manufactured structure 200 after the preparing of the surface which can include grinding, polishing, cleaning and/or honing 1214 and the wear-resistant coating 228 may be applied over the strike electroplating. In other examples, the electroless nickel plating may be applied over the strike electroplating.

Examples of the methods 100, 700, 800, 900, 1000, 1200, 1300, 1400 for manufacturing additively manufactured structures 200 for internal combustion engines and the additively manufactured structures 200 for internal combustion engines may be related to or used in the context of unmanned air vehicle manufacturing. Although an unmanned air vehicle example is described, the examples and principles disclosed herein may be applied to other products in the aerospace industry and other industries, such as the automotive industry, the space industry, the construction industry and other design and manufacturing industries. Accordingly, in addition to unmanned air vehicles, the examples and principles disclosed herein may be implemented to produce components and other equipment in various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element or component in the different drawings. Throughout the present disclosure, any one of a plurality of items may be referred to individually as the item and a plurality of items may be referred to collectively as the items and may be referred to with like reference numerals. Moreover, as used herein, a feature, element, component or step preceded with the word "a" or "an" should be understood as not excluding a plurality of features, elements, components or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component or hardware "configured to" perform a specified function is indeed capable of performing the specified function without any alteration, rather than merely having potential to perform the specified function after further modification. In other words, the system, apparatus, device, structure, article, element, component or hardware "configured to" perform a specified function is specifically selected, created, implemented, utilized, programmed and/or designed for the purpose of performing the specified function. As used herein, "configured to" denotes existing characteristics of a system, apparatus, structure, article, element, component or hardware that enable the system, apparatus, structure, article, element, component or hardware to perform the specified function without further modification. For purposes of this disclosure, a system, apparatus, device, structure, article, element, component or hardware described as being "configured to" perform a particular function may additionally or alternatively be described as being "adapted to" and/or as being "operative to" perform that function.

Unless otherwise indicated, the terms "first," "second," "third," etc. are used herein merely as labels and are not intended to impose ordinal, positional or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1, 7-10, 12A-B, 13 and 14, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 1, 7-10, 12A-B, 13 and 14 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

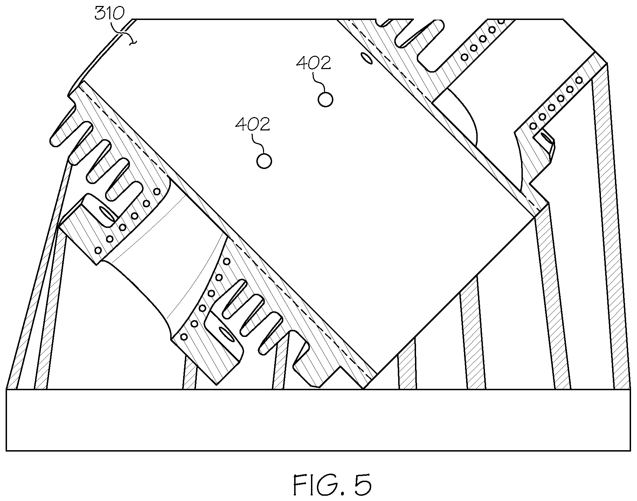

In Figs. 2A-C, 3-6 and 11, referred to above, may represent functional elements, features or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 2A-C, 3-6 and 11, referred to above, need be included in every example and not all elements, features and/or components described herein are necessarily depicted in each illustrative example. Accordingly, some of the elements, features and/or components described and illustrated in Figs. 2A-C, 3-6 and 11 may be combined in various ways without the need to include other features described and illustrated in Figs. 2A-C, 3-6 and 11, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 2A-C, 3-6 and 11, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 2A-C, 3-6 and 11 and such elements, features and/or components may not be discussed in detail herein with reference to each of Figs. 2A-C, 3-6 and 11. Similarly, all elements, features and/or components may not be labeled in each of Figs. 2A-C, 3-6 and 11, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage or characteristic described in connection with an example is included in at least one example. Thus, discussion of features, advantages and similar language used throughout the present disclosure may, but does not necessarily, refer to the same example.

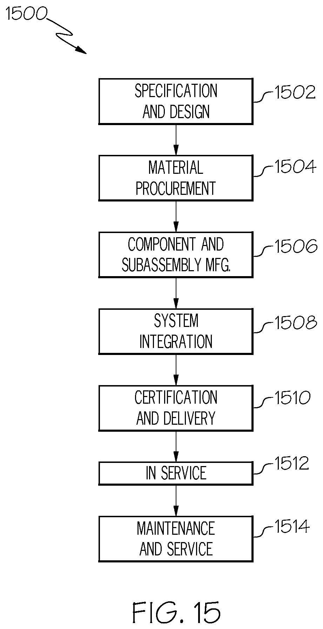

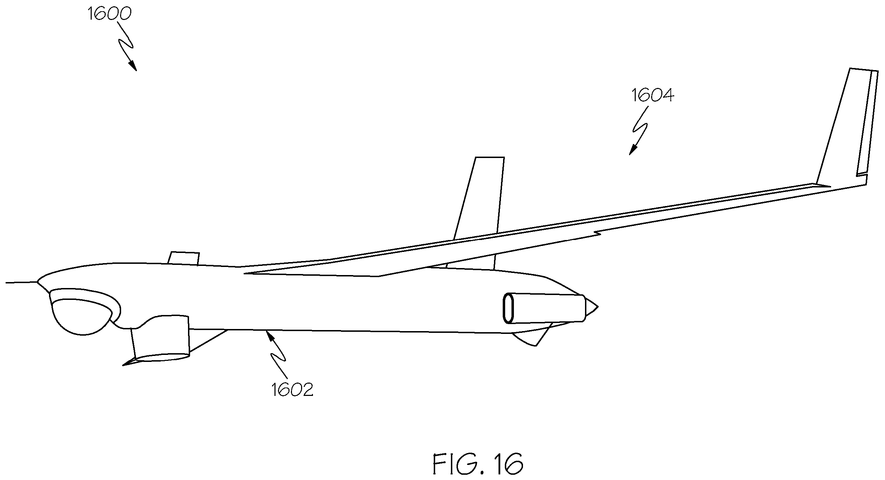

Examples of the subject matter disclosed herein may be described in the context of unmanned air vehicle manufacturing and service method 1500 as shown in Fig. 15 and unmanned air vehicles 1600 as shown in Fig. 16. In one or more examples, the disclosed methods 100, 700, 800, 900, 1000, 1200, 1300, 1400 for manufacturing additively manufactured structures 200 for internal combustion engines and the disclosed additively manufactured structures 200 for internal combustion engines may be used in unmanned air vehicle manufacturing. During pre-production, the service method 1500 may include specification and design (block 1502) of the unmanned air vehicle 1600 and material procurement (block 1504). During production, component and subassembly manufacturing (block 1506) and system integration (block 1508) of the unmanned air vehicle 1600 may take place. Thereafter, unmanned air vehicles 1600 may go through certification and delivery (block 1150) to be placed in service (block 1512). While in service, unmanned air vehicles 1600 may be scheduled for routine maintenance and service (block 1514). Routine maintenance and service may include modification, reconfiguration, refurbishment, etc. of one or more systems of unmanned air vehicle 1600.

Each of the processes of the service method 1500 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 16, an unmanned air vehicle 1600 produced by the service method 1500 may include airframe 1602 with a plurality of high-level systems 1604. Examples of high-level systems 1604 include one or more of propulsion system, electrical system and hydraulic system. Any number of other systems may be included. Although an aerospace example is shown, the principles disclosed herein may be applied to other industries, such as the automotive industry. Accordingly, in addition to unmanned air vehicles 1600, the principles disclosed herein may apply to other vehicles, e.g., land vehicles, marine vehicles, space vehicles, etc.

The disclosed methods 100, 700, 800, 900, 1000, 1200, 1300, 1400 for manufacturing additively manufactured structures 200 for internal combustion engines and the disclosed additively manufactured structures 200 for internal combustion engines may be employed during any one or more of the stages of the manufacturing and service method 1500. For example, components or subassemblies corresponding to component and subassembly manufacturing (block 1506) may be fabricated or manufactured in a manner similar to components or subassemblies produced while the unmanned air vehicle 1600 is in service (block 1512). Also, one or more examples of the additively manufactured structure(s), method(s) or combination thereof may be utilized during production stages (block 1506 and block 1508), for example, by substantially expediting assembly of or reducing the cost of the unmanned air vehicle 1600. Similarly, one or more examples of the additively manufactured structure or method realizations or a combination thereof, may be utilized, for example and without limitation, while the unmanned air vehicle 1600 is in service (block 1512) and/or during maintenance and service (block 1514).

Furthermore, following the examples described above, the disclosure may provide the following combination of features forming example embodiments that represent the alternatives within the scope of the presently claimed subject matter.

Example 1: A method 100 for manufacturing an additively manufactured structure 200 for an internal combustion engine, the method comprising: identifying 102 a start point 302 on a build plate 304 for construction of the additively manufactured structure 200, the additively manufactured structure 200 comprising a body member 202 and at least two gas ports 204, the body member 202 defining an external body surface 206 and a body bore 208, the body bore 208 defining an internal body surface 210, each gas port 204 defining an external port surface 212 and a port bore 213, each port bore 213 defining an internal port surface 214; and identifying 104 an orientation 306 of the additively manufactured structure 200 to the build plate 304 such that surface areas of the internal body surface 210 and each internal port surface 214 are at least approximately 20 degrees offset from parallel to the build plate 304 for the additively manufactured structure 200 such that no portion of the surface areas is equivalent to an area of a circle having a radius of 5 mm or larger.

Example 2: The method of Example 1, wherein the orientation 306 of the additively manufactured structure 200 to the build plate 304 is such that surface areas of the internal body surface 210 and each internal port surface 214 are at least approximately 25 degrees offset from parallel to the build plate 304 for the additively manufactured structure 200 such that no portion of the surface areas is equivalent to an area of a circle having a radius of 5 mm or larger.

Example 3: The method of Example 2, wherein the orientation 306 of the additively manufactured structure 200 to the build plate 304 is such that surface areas of the internal body surface 210 and each internal port surface 214 are at least approximately 30 degrees offset from parallel to the build plate 304 for the additively manufactured structure 200 such that no portion of the surface areas is equivalent to an area of a circle having a radius of 5 mm or larger.

Example 4: The method of Examples 1-3, wherein the body member 202 comprises an engine cylinder 216 and the at least two gas ports 204 comprises an intake gas port 218 and an exhaust gas port 220.

Example 5: The method of Examples 1-4, further comprising: preparing 106 the build plate 304 and a bed of metal powder for construction of the additively manufactured structure 200; welding 108 a first layer of the additively manufactured structure 200 and the first layer of support structures 308 to the build plate 304 using laser powder bed fusion, the support structures 308 extending from the build plate 304 to select external locations on the additively manufactured structure 200 for support during construction; and repeating 110 the preparing 106 of the build plate 304 and the welding 108 of the first layer to continue layer-by-layer construction of the additively manufactured structure 200 and the support structures 308 until a last layer is welded.

Example 6: The method of Example 5, wherein the welding 108 is performed by a melt laser.

Example 7: The method of Examples 5-6, wherein the layer-by-layer construction builds internal fluid channels 222 proximate the body bore 208 or one or more of the at least two gas ports 204 to facilitate cooling.

Example 8: The method of Examples 5-7, wherein the layer-by-layer construction builds external cooling fins 223 extending from the external body surface 206 of the body member 202.

Example 9: The method of Examples 5-8, wherein, during the layer-by-layer construction, the internal body surface 210 and each internal port surface 214 are constructed free of support structures 308 to the build plate 304.

Example 10: The method of Examples 5-9, wherein, during the layer-by-layer construction, internal surface areas of the additively manufactured structure 200 that cannot be accessed for machining are constructed free of support structures 308 to the build plate 304.

Example 11: The method 700 of Examples 5-10, further comprising: forming 702 filleted transitions 224 where the at least two gas ports 204 are joined to the body member 202 such that each internal port surface 214 of the at least two gas ports 204 converges with the internal body surface 210, and wherein a radius of the filleted transition 224 is less than approximately three millimeters where transition surfaces 226 of the filleted transitions 224 are less than approximately 20 degrees offset from parallel to the build plate 304.

Example 12: The method of Example 11, wherein radii of the filleted transitions 224 are less than approximately five millimeters where the transition surfaces 226 of the filleted transitions 224 are less than approximately 20 degrees offset from parallel to the build plate 304.

Example 13: The method of Examples 5-12, wherein the layer-by-layer construction builds a metal sleeve 310 on the internal body surface 210 of the body bore 208 with powder removal holes 402 to facilitate subsequent post-processing of the internal body surface 210.

Example 14: The method of Examples 5-13, wherein the layer-by-layer construction builds continuous cylindrical walls that allow unsupported edges of the at least two gas ports 204 that intersect the body bore 208 to be built during the layer-by-layer construction, the continuous cylindrical walls machined away during subsequent post-processing to expose the at least two gas ports 204 to the body bore 208.

Example 15: The method of Examples 5-14, wherein the metal powder comprises a metal alloy material that retains tensile strength greater than 206.8 MPa (30 kilo pounds per square inch) at operating temperatures of 246.1 °C (475 °F) for 1,000 hours.

Example 16: The method of Example 15, wherein the metal alloy material comprises at least one of an aluminum alloy material and a magnesium alloy material.

Example 17: The method 800 of Examples 5-16, the preparing 106 of the build plate 304 comprising: pre-heating 802 the bed of metal powder prior to the welding 108 of the first layer and, during the layer-by-layer construction, pre-heating 802 a previously welded layer prior to welding a next layer of the additively manufactured structure 200, wherein the pre-heating reduces a thermal gradient in the additively manufactured structure 200.

Example 18: The method of Example 17, wherein the pre-heating 802 is performed by a pre-heat laser.

Example 19: The method of Examples 17-18, further comprising: post-heating 804 the bed of metal powder after the welding 108 of the first layer and, during the layer-by-layer construction, post-heating 804 a current welded layer prior to preparing for the next layer of the additively manufactured structure 200, wherein the post-heating reduces the thermal gradient in the additively manufactured structure 200.

Example 20: The method 900 of Examples 5-19, further comprising: post-heating 902 the bed of metal powder after the welding 108 of the first layer and, during the layer-by-layer construction, post-heating 902 a current welded layer prior to preparing for a next layer of the additively manufactured structure 200, wherein the post-heating reduces a thermal gradient in the additively manufactured structure 200.

Example 21: The method of Example 20, wherein the post-heating 902 is performed by a post-heat laser.

Example 22: The method 1000 of Examples 5-21, further comprising: removing 1002 the support structures 308 from the additively manufactured structure 200; grinding, polishing, cleaning and/or honing 1004 the internal body surface 210 on the body bore 208; and applying 1006 a wear-resistant coating 228 to at least a portion of the internal body surface 210 of the body bore 208 for subsequent contact by a piston or a piston ring.

Example 23: The method of Example 22, wherein the wear-resistant coating 228 comprises at least one of a nickel-silicon-carbide coating and a tungsten carbide coating.

Example 24: The method of Examples 22-23, further comprising: applying a strike electroplating to at least a portion of the additively manufactured structure 200 prior to the applying 1006 of the wear-resistant coating 228.

Example 25: The method of Examples 22-24, further comprising: applying an electroless nickel plating to at least a portion of the additively manufactured structure 200 prior to the applying 1006 of the wear-resistant coating 228.

Example 26: The method of Examples 22-25, further comprising: direct age hardening 1008 the additively manufactured structure 200 to increase tensile strength.

Example 27: The method of Example 26, wherein the wear-resistant coating 228 has a hardness between 400 and 2800 on a Vickers scale.

Example 28: An additively manufactured structure 200 for an internal combustion engine, the additively manufactured structure comprising: a body member 202 defining an external body surface 206 and a body bore 208, the body bore 208 defining an internal body surface 210; and at least two gas ports 204, each gas port 204 defining an external port surface 212 and a port bore 213, each port bore 213 defining an internal port surface 214, and wherein surface areas of the internal body surface 210 and each internal port surface 214 are at least approximately 20 degrees offset from parallel to a build plate 304 for the additively manufactured structure 200 such that no portion of the surface areas is equivalent to an area of a circle having a radius of 5 mm or larger.

Example 29: The additively manufactured structure of Example 28, wherein surface areas of the internal body surface 210 and each internal port surface 214 are at least approximately 25 degrees offset from parallel to the build plate 304 for the additively manufactured structure 200 such that no portion of the surface areas is equivalent to an area of a circle having a radius of 5 mm or larger.

Example 30: The additively manufactured structure of Example 29, wherein surface areas of the internal body surface 210 and each internal port surface 214 are at least approximately 30 degrees offset from parallel to the build plate 304 for the additively manufactured structure 200 such that no portion of the surface areas is equivalent to an area of a circle having a radius of 5 mm or larger.

Example 31: The additively manufactured structure of Examples 28-30, wherein the body member 202 comprises an engine cylinder 216 and the at least two gas ports 204 comprises an intake gas port 218 and an exhaust gas port 220.

Example 32: The additively manufactured structure of Examples 28-31, further comprising: internal fluid channels 222 proximate the body bore 208 or one or more of the at least two gas ports 204 to facilitate cooling.

Example 33: The additively manufactured structure of Example 28-32, further comprising: external cooling fins 223 extending from the external body surface 206 of the body member 202.

Example 34: The additively manufactured structure of Example 28-33, wherein the at least two gas ports 204 are joined to the body member 202 such that each internal port surface 214 of the at least two gas ports 204 converges with the internal body surface 210 to form a filleted transition 224 between the body member 202 and each of the at least two gas ports 204, and wherein, where a transition surface 226 of the filleted transition 224 is less than approximately 20 degrees offset from parallel to the build plate 304, a radius of the filleted transition 224 is less than approximately three millimeters.

Example 35: The additively manufactured structure of Example 34, wherein, where the transition surface 226 of the filleted transition 224 is less than approximately 20 degrees offset from parallel to the build plate 304, the radius of the filleted transition 224 is less than approximately five millimeters.

Example 36: The additively manufactured structure of Example 28-35, wherein the additively manufactured structure 200 comprises a metal alloy material that retains tensile strength greater than 206.8 MPa (30 kilo pounds per square inch) at operating temperatures of 246.1 °C (475 °F) for 1,000 hours.

Example 37: The additively manufactured structure of Example 36, wherein the metal alloy material comprises at least one of an aluminum alloy material and a magnesium alloy material.

Example 38: The additively manufactured structure of Examples 36-37, wherein the additively manufactured structure 200 is direct age hardened to achieve the tensile strength.

Example 39: The additively manufactured structure of Examples 28-38, the body member 202 comprising: a wear-resistant coating 228 on the internal body surface 210 of the body bore 208 for subsequent contact by a piston or a piston ring.

Example 40: The additively manufactured structure of Example 39, wherein the wear-resistant coating 228 has a hardness between 400 and 2800 on a Vickers scale.

Example 41: The additively manufactured structure of Examples 39-40, wherein the wear-resistant coating 228 comprises at least one of a nickel-silicon-carbide coating and a tungsten carbide coating.

Example 42: The additively manufactured structure of Examples 28-41, further comprising: a strike electroplating on at least a portion of the additively manufactured structure 200.

Example 43: The additively manufactured structure of Examples 28-42, further comprising: an electroless nickel plating on at least a portion of the additively manufactured structure 200.

Example 44: A method 1200 for manufacturing an additively manufactured structure 200 for an internal combustion engine, the method comprising: identifying 1202 a start point 302 on a build plate 304 for construction of the additively manufactured structure 200, the additively manufactured structure 200 comprising a body member 202 and at least two gas ports 204, the body member 202 defining an external body surface 206 and a body bore 208, the body bore 208 defining an internal body surface 210, each gas port 204 defining an external port surface 212 and a port bore 213, each port bore 213 defining an internal port surface 214; identifying 1204 an orientation 306 of the additively manufactured structure 200 to the build plate 304 such that surface areas of the internal body surface 210 and each internal port surface 214 are at least approximately 20 degrees offset from parallel to the build plate 304 for the additively manufactured structure 200 such that no portion of the surface areas is equivalent to an area of a circle having a radius of 5 mm or larger; preparing 1206 the build plate 304 and a bed of metal powder for construction of the additively manufactured structure 200; welding 1208 a first layer of the additively manufactured structure 200 and the first layer of support structures 308 to the build plate 304 using laser powder bed fusion, the support structures 308 extending from the build plate 304 to select external locations on the additively manufactured structure 200 for support during construction; repeating 1210 the preparing 1206 of the build plate 304 and the welding 1208 of the first layer to continue layer-by-layer construction of the additively manufactured structure 200 and the support structures 308 until a last layer is welded; removing 1212 the support structures 308 from the additively manufactured structure 200; grinding, polishing, cleaning and/or honing 1214 the internal body surface 210 on the body bore 208; applying 1216 a wear-resistant coating 228 to at least a portion of the internal body surface 210 of the body bore 208 for subsequent contact by a piston or a piston ring; and direct age hardening 1218 the additively manufactured structure 200 to increase tensile strength.

Example 45: The method 1300 of Example 44, further comprising: forming 1302 filleted transitions 224 where the at least two gas ports 204 are joined to the body member 202 such that each internal port surface 214 of the at least two gas ports 204 converges with the internal body surface 210, and wherein, where transition surfaces 226 of the filleted transitions 224 are less than approximately 20 degrees offset from parallel to the build plate 304, a radius of the filleted transition 224 is less than approximately three millimeters.

Example 46: The method of Examples 44-45, further comprising: post-heating 1304 the bed of metal powder after the welding 1208 of the first layer and, during the layer-by-layer construction, post-heating 1304 a current welded layer prior to preparing 1206 for a next layer of the additively manufactured structure 200, wherein the post-heating reduces a thermal gradient in the additively manufactured structure 200.

Example 47: The method 1400 of Examples 44-46, the preparing 1206 of the build plate 304 comprising: pre-heating 1402 the bed of metal powder prior to the welding 1208 of the first layer and, during the layer-by-layer construction, pre-heating 1402 a previously welded layer prior to welding 1208 a next layer of the additively manufactured structure 200, wherein the pre-heating reduces a thermal gradient in the additively manufactured structure 200.

Example 48: The method of Examples 44-47, further comprising: applying a strike electroplating to at least a portion of the additively manufactured structure 200 prior to the applying 1216 of the wear-resistant coating 228.

Example 49: The method of Examples 44-48, further comprising: applying an electroless nickel plating to at least a portion of the additively manufactured structure 200 prior to the applying 1216 of the wear-resistant coating 228.

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 700, 800, 900, 1000, 1200, 1300, 1400 for manufacturing additively manufactured structures 200 for internal combustion engines and the disclosed additively manufactured structures 200 for internal combustion engines have been shown and described, modifications may occur to those skilled in the art upon reading the specification. The present application includes such modifications and is limited only by the scope of the claims.

## Claims

1. A method (100) for manufacturing an additively manufactured structure (200) for an internal combustion engine, the method comprising:
identifying (102) a start point (302) on a build plate (304) for construction of the additively manufactured structure (200), the additively manufactured structure (200) comprising a body member (202) and at least two gas ports (204), the body member (202) defining an external body surface (206) and a body bore (208), the body bore (208) defining an internal body surface (210), each gas port (204) defining an external port surface (212) and a port bore (213), each port bore (213) defining an internal port surface (214); and
identifying (104) an orientation (306) of the additively manufactured structure (200) to the build plate (304) such that surface areas of the internal body surface (210) and each internal port surface (214) are at least approximately 20 degrees offset from parallel to the build plate (304) for the additively manufactured structure (200) such that no portion of the surface areas is equivalent to an area of a circle having a radius of 5 mm or larger.

2. The method of Claim 1, wherein the orientation (306) of the additively manufactured structure (200) to the build plate (304) is such that surface areas of the internal body surface (210) and each internal port surface (214) are at least approximately 25 degrees or at least approximately 30 degrees offset from parallel to the build plate (304) for the additively manufactured structure (200) such that no portion of the surface areas is equivalent to an area of a circle having a radius of 5 mm or larger.

3. The method of Claim 1 or 2, further comprising:
preparing (106) the build plate (304) and a bed of metal powder for construction of the additively manufactured structure (200);
welding (108) a first layer of the additively manufactured structure (200) and the first layer of support structures (308) to the build plate (304) using laser powder bed fusion, the support structures (308) extending from the build plate (304) to select external locations on the additively manufactured structure (200) for support during construction; and
repeating (110) the preparing (106) of the build plate (304) and the welding (108) of the first layer to continue layer-by-layer construction of the additively manufactured structure (200) and the support structures (308) until a last layer is welded.

4. The method of Claim 3, wherein, during the layer-by-layer construction, the internal body surface (210) and each internal port surface (214) are constructed free of support structures (308) to the build plate (304).

5. The method of Claim 3 or 4, wherein, during the layer-by-layer construction, internal surface areas of the additively manufactured structure (200) that cannot be accessed for machining are constructed free of support structures (308) to the build plate (304).

6. The method of any one of Claims 3 to 5, wherein the layer-by-layer construction builds a metal sleeve (310) on the internal body surface (210) of the body bore (208) with powder removal holes (402) to facilitate subsequent post-processing of the internal body surface (210).

7. The method of any one of Claims 3 to 6, wherein the layer-by-layer construction builds continuous cylindrical walls that allow unsupported edges of the at least two gas ports (204) that intersect the body bore (208) to be built during the layer-by-layer construction, the continuous cylindrical walls machined away during subsequent post-processing to expose the at least two gas ports (204) to the body bore (208).

8. The method (800) of any one of Claims 3 to 7, the preparing (106) of the build plate (304) comprising:
pre-heating (802) the bed of metal powder prior to the welding (108) of the first layer and, during the layer-by-layer construction, pre-heating (802) a previously welded layer prior to welding a next layer of the additively manufactured structure (200), wherein the pre-heating reduces a thermal gradient in the additively manufactured structure (200).

9. The method (900) of any one of Claims 3 to 8, further comprising:
post-heating (902) the bed of metal powder after the welding (108) of the first layer and, during the layer-by-layer construction, post-heating (902) a current welded layer prior to preparing for a next layer of the additively manufactured structure (200), wherein the post-heating reduces a thermal gradient in the additively manufactured structure (200).

10. The method (1000) of any one of Claims 3 to 9, further comprising:
removing (1002) the support structures (308) from the additively manufactured structure (200);
grinding, polishing, cleaning and/or honing (1004) the internal body surface (210) on the body bore (208); and
applying (1006) a wear-resistant coating (228) to at least a portion of the internal body surface (210) of the body bore (208) for subsequent contact by a piston or a piston ring.

11. The method of Claim 10, further comprising:
applying a strike electroplating to at least a portion of the additively manufactured structure (200) prior to the applying (1006) of the wear-resistant coating (228).

12. The method of Claim 10 or 11, further comprising:
applying an electroless nickel plating to at least a portion of the additively manufactured structure (200) prior to the applying (1006) of the wear-resistant coating (228).

13. The method of any one of Claims 10 to 12, further comprising:
direct age hardening (1008) the additively manufactured structure (200) to increase tensile strength.

14. An additively manufactured structure (200) for an internal combustion engine, the additively manufactured structure comprising:
a body member (202) defining an external body surface (206) and a body bore (208), the body bore (208) defining an internal body surface (210); and
at least two gas ports (204), each gas port (204) defining an external port surface (212) and a port bore (213), each port bore (213) defining an internal port surface (214), and
wherein when the additively manufactured structure (200) is manufactured according to claim 1, surface areas of the internal body surface (210) and each internal port surface (214) are at least approximately 20 degrees offset from parallel to the build plate (304) for the additively manufactured structure (200) such that no portion of the surface areas is equivalent to an area of a circle having a radius of 5 mm or larger.

15. The additively manufactured structure of Claim 14, wherein the at least two gas ports (204) are joined to the body member (202) such that each internal port surface (214) of the at least two gas ports (204) converges with the internal body surface (210) to form a filleted transition (224) between the body member (202) and each of the at least two gas ports (204), and
wherein, where a transition surface (226) of the filleted transition (224) is less than approximately 20 degrees offset from parallel to the build plate (304), a radius of the filleted transition (224) is less than approximately three millimeters.
